# FASCICULE DE BREVET EUROPEEN

(11) **EP 1 840 108 B1**
(45) Date de publication et mention de la délivrance du brevet: **21.07.2010**
(21) Numéro de dépôt: 06111851.9
(22) Date de dépôt: 28.03.2006
(51) Int. Cl.: C04B 41/80, G04B 37/22, A44C 27/00

(54) **Procédé de réalisation d'une surface satinée**
Verfahren zur Herstellung einer satinierten Oberfläche
Process of providing a satin finished surface

(43) Date de publication de la demande: 03.10.2007
(73) Titulaire: Comadur S.A., 2400 Le Locle (CH)
(72) Inventeur: Besson, François, 1420, Fiez (CH); Boucard, Sylvain, 25130, Villers-le-lac (FR)
(74) Mandataire: Ravenel, Thierry Gérard Louis

(56) Documents cités:
- US-A1- 2005 155 955
- US-B1- 6 599 461

## Description

L'invention se rapporte au domaine de la microtechnique. Elle concerne plus particulièrement un procédé de décoration locale d'une pièce en matériau dur. Par matériau dur, on entend des matériaux présentant une dureté Vickers supérieure à 1000HV.

Les céramiques telles que la zircone ZrO2 ou l'alumine Al2O3, et les matériaux durs de manière générale, sont largement employés en horlogerie pour la réalisation de boîtes et de bracelets inrayables. L'état de surface de ces pièces est généralement l'état poli qui donne un aspect brillant à la pièce. Le satinage mécanique de ces matériaux est malaisé car étant très durs, ils sont difficilement usinables. De plus, un tel satinage ne permet pas de réaliser des motifs, car il s'applique à l'intégralité de la surface.

Le document US 2005/0 155 955 A décrit un procédé pour réduire l'ébouissement et la création de finition mate sur une surface d'un objet.

La présente invention propose un procédé de satinage local d'une pièce en matériau dur, en particulier en céramique, permettant la réalisation de motif en surface.
Plus précisément l'invention concerne un procédé de réalisation d'une surface satinée sur une pièce en un matériau présentant une dureté Vickers supérieure à 1000HV comportant au moins une surface polie, comprenant principalement les étapes suivantes :
- se munir d'un support pour la pièce et d'un laser à impulsion, dotés d'un mouvement relatif l'un par rapport à l'autre dans un plan XY,
- exposer localement la surface polie à une impulsion du laser apportant suffisamment d'énergie pour provoquer une fusion locale de la surface polie de manière à former un micro-cratère,
- répéter les impulsions du laser simultanément à un déplacement relatif de la pièce par rapport au laser, de manière à tracer sur la surface polie des micro-sillons formés par l'alignement de plusieurs micro-cratères successifs se recouvrant partiellement, les micro-sillons étant sensiblement parallèles les uns aux autres et équidistants, et définissant ensemble la surface satinée.

L'invention concerne également une pièce en un matériau présentant une dureté Vickers supérieure à 1000HV, comportant une surface polie présentant localement un aspect satiné dû à la présence de micro-sillons sensiblement parallèles les uns aux autres et équidistants, qui sont formés par l'alignement de micro-cratères (10) se recouvrant partiellement et sensiblement équidistants.

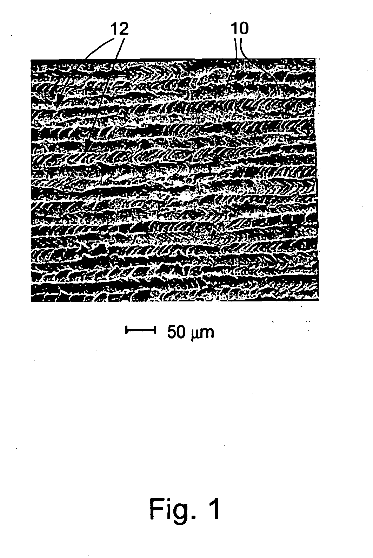

D'autres caractéristiques apparaîtront plus clairement à la lecture de la description qui suit d'un exemple de mise en oeuvre du procédé selon l'invention, la description étant faite en référence à la figure 1 annexée qui est un grossissement représentant l'état de surface satiné de la pièce traitée par le procédé selon l'invention.

Une pièce en zircone Zr02 pigmentée est utilisée pour le procédé selon l'invention. On entend par zircone pigmentée, un oxyde de zirconium Zr02 dopé avec un oxyde d'yttrium, de calcium, de magnésium ou de scandium, destiné à stabiliser la zircone, et contenant un oxyde métallique. Dans une variante du procédé, on pourrait employer une autre céramique ou un cermet, par exemple l'oxyde d'aluminium Al2O3, le carbure de titane TiC, ou tout autre céramique ou cermet adaptée à la fabrication de pièces mécaniques. La pièce est, par exemple, une boîte de montre ou un maillon de bracelet. Elle comporte au moins une surface polie par un procédé bien connu de l'homme de métier.

Le procédé selon l'invention consiste à illuminer localement la surface polie d'une telle pièce à l'aide d'un laser. Pour cela, la pièce est disposée sur un support, à la verticale d'un laser mobile dans un plan XY et dont le mouvement est contrôlé par un ordinateur. Le laser est de type Nd:YAG à impulsion, pompé optiquement, de longueur d'onde 1.06µm, de puissance optique 75W. Le laser est utilisé en mode q-switched. La taille du spot est de 100µm, la fréquence des impulsions est de 20 à 40kHz, et leur largeur est de 11µs. La vitesse de balayage est de l'ordre de 500 à 800 mm/s. Un motif est choisi et converti, par un logiciel adapté, en une série de commandes de déplacement du laser. La surface de la pièce est ainsi balayée par le faisceau laser de façon à former le motif choisi.

Une photographie prise au microscope électronique à balayage de la surface de la pièce ainsi traitée est représentée en figure 1. Sous l'effet d'une impulsion laser, et à condition d'apporter localement suffisamment d'énergie, la surface illuminée fond localement et un micro-cratère 10 de diamètre environ 50µm est formé. La succession des impulsions combinée au déplacement du laser, permet de tracer un micro-sillon 12 sensiblement rectiligne formé par l'alignement des micro-cratères 10 successifs se superposant partiellement. On notera qu'au sein d'un micro-sillon 12, les micro-cratères 10 sont sensiblement équidistants. Les micro-sillons 12 sont eux-mêmes sensiblement parallèles les uns aux autres, sensiblement équidistants et partiellement superposés. Ils définissent ensemble une surface présentant une rugosité organisée à l'échelle microscopique. A l'échelle macroscopique une telle surface présente un aspect satiné particulièrement esthétique, dû à la présence de micro-structures sensiblement parallèles et équidistantes. Le contraste entre la surface polie et la surface satinée par le laser forme le motif choisi.

On notera que la présente invention n'est pas limitée à l'exemple de mise en oeuvre du procédé qui vient d'être décrit, et que diverses modifications et variantes simples peuvent être envisagées par l'homme du métier sans sortir du cadre de l'invention tel que défini par les revendications annexées.

En particulier, dans le procédé de satinage local décrit, les cratères 10 sont fortement superposés. Dans une variante du procédé, ils pourraient être faiblement superposés, tout en restant alignés de manière à former un micro-sillon 12. Par ailleurs, les micro-sillons pourraient être juxtaposés ou même légèrement distants les uns des autres, tout en restant sensiblement parallèles et équidistants. L'aspect satiné en serait inchangé.

## Revendications

1. Procédé de réalisation d'une surface satinée sur une pièce en un matériau présentant une dureté Vickers supérieure à 1000HV comportant au moins une surface polie, comprenant principalement les étapes suivantes :
- se munir d'un support pour ladite pièce et d'un laser à impulsion, dotés d'un mouvement relatif l'un par rapport à l'autre dans un plan XY,
- exposer localement ladite surface polie à une impulsion dudit laser apportant suffisamment d'énergie pour provoquer une fusion locale de la surface polie de manière à former un micro-cratère (10),
- répéter les impulsions dudit laser simultanément à un déplacement relatif de ladite pièce par rapport audit laser, de manière à tracer sur ladite surface polie des micro-sillons (12) formés par l'alignement de plusieurs micro-cratères (10) successifs se recouvrant partiellement, lesdits micro-sillons (12) étant sensiblement parallèles les uns aux autres et équidistants, et définissant ensemble ladite surface satinée.

2. Procédé selon la revendication 1, **caractérisé en ce que** le déplacement relatif dudit laser par rapport à ladite pièce est contrôlé de façon à ce que ladite surface satinée forme un motif contrastant avec ladite surface polie.

3. Procédé selon la revendication 1 ou 2, **caractérisé en ce que** ledit matériau est une céramique.

4. Procédé selon la revendication 3, **caractérisé en ce que** ladite céramique est un oxyde métallique.

5. Pièce en un matériau présentant une dureté Vickers supérieure à 1000HV, comportant une surface polie présentant localement un aspect satiné dû à la présence de micro-sillons (12) sensiblement parallèles les uns aux autres et équidistants, **caractérisée en ce que** lesdits micro-sillons (12) sont formés par l'alignement de micro-cratères (10) se recouvrant partiellement et sensiblement équidistants.

## Claims

1. Method of making a satin finish surface on a part made of a material having a Vickers hardness greater than 1000HV, including at least one polished surface, including mainly the following steps:
- taking a support for said part and a pulse laser, capable of a relative movement with respect to each other in an XY plane,
- exposing said polished surface locally to a pulse from said laser with enough energy to cause local melting of the polished surface so as to form a micro-crater (10),
- repeating said laser pulses simultaneously with a relative movement of said piece with respect to said laser, so as to trace micro-furrows (12) on said polished surface, formed by the alignment of several successive partially overlapping micro-furrows (10), the micro-furrows (12) being substantially parallel to each other and equidistant, and together defining said satin finish surface.

2. Method according to claim 1, **characterized in that** the relative movement of said laser with respect to said piece is controlled such that said satin finish surface forms a pattern that contrasts with said polished surface.

3. Method according to claim 1 or 2, **characterized in that** said material is a ceramic material.

4. Method according to claim 3, **characterized in that** said ceramic material is a metallic oxide.

5. Part made of a material with a Vickers hardness greater than 1000HV, including a polished surface locally exhibiting a satin finish due to the presence of micro-furrows (12) that are substantially parallel to each other and equidistant, **characterized in that** said micro-furrows (12) are formed by the alignment of partially overlapping and substantially equidistant micro-craters (10).

## Patentansprüche

1. Verfahren zur Herstellung einer satinierten Oberfläche auf einem Teil, das aus einem Material mit einer Vickers-Härte grösser als 1000HV besteht und wenigstens eine polierte Oberfläche aufweist, umfassend im Wesentlichen die folgenden Schritte:
- sich mit einer Unterlage für das besagte Teil und einem Puls-Laser ausstatten, die sich in einer XY-Ebene in Bezug zueinander bewegen können,
- die besagte polierte Oberfläche lokal einem Puls des besagten Lasers mit genügend Energie aussetzen, so dass die besagte polierte Oberfläche lokal schmilzt , um einen Mikrokrater (10) zu bilden,
- die besagten Laser-Pulse gleichzeitig mit einer Relativbewegung des besagten Teils in Bezug auf den Laser wiederholen, um Mikrorillen (12) auf der besagten polierten Oberfläche zu bilden, die durch die Aneinanderreihung mehrerer aufeinenanderfolgender Milkrokrater (10) geformt sind, die sich teilweise gegenseitig überlappen, wobei die besagten Mikrorillen (12) im Wesentlichen parallel und abstandgleich voneinander liegen, und gemeinsam die besagte Oberfläche bilden.

2. Verfahren gemäss Anspruch 1, **dadurch gekennzeichnet, dass** die besagte Relativebewegung des besagten Lasers gegenüber dem besagten Teil derart gesteuert ist, dass die besagte satinierte Oberfläche ein Motiv bildet, das mit der polierten Oberfläche kontrastiert.

3. Verfahren gemäss Anspruch 1 oder 2, **dadurch gekennzeichnet, dass** das besagte Material eine Keramik ist.

4. Verfahren gemäss Anspruch 1, **dadurch gekennzeichnet, dass** die besagte Keramik ein Metalloxyd ist.

5. Teil, das aus einem Material mit einer Vickers-Härte grösser als 1000HV besteht und eine polierte Oberfläche aufweist, die lokal eine satinierte Fläche dank im Wesentlichen parallel und abstandgleich voneinander liegender Mikrorillen (12) aufweist, **dadurch gekennzeichnet, dass** die Mikrorillen (12) durch die gerade Aneinanderreihung mehrerer aufeinenanderfolgender Milkrokrater (10) geformt sind, die sich teilweise gegenseitig überlappen und im Wesentlichen abstandgleich voneinander liegen.
